(19) Europäisches Patentamt
European Patent Office
Office européen des brevets

(11) Publication number: **0 151 041 B1**

(12) **EUROPEAN PATENT SPECIFICATION**

(45) Date of publication of patent specification: **20.05.92**

(51) Int. Cl.[5]: **C08L 79/08**, C08J 5/18

(21) Application number: **85300650.0**

(22) Date of filing: **30.01.85**

The file contains technical information submitted after the application was filed and not included in this specification

(54) **Injection moldable amide-imide copolymers containing polyetherimides.**

(30) Priority: **31.01.84 US 576136**

(43) Date of publication of application:
**07.08.85 Bulletin 85/32**

(45) Publication of the grant of the patent:
**20.05.92 Bulletin 92/21**

(84) Designated Contracting States:
**AT BE CH DE FR GB IT LI LU NL SE**

(56) References cited:
**WO-A-81/01568**
**DE-A- 2 150 435**
**US-A- 4 224 214**
**US-A- 4 424 294**

**PATENT ABSTRACTS OF JAPAN, vol. 8, no. 246 (C-251)[1683], 10th November 1984; & JP - A - 59 126 464 (TORAY K.K.) 21-07-1984**

**PATENT ABSTRACTS OF JAPAN, vol. 8, no. 93 (C-220)[1530], 27th April 1984; & JP - A - 59 11356 (MITSUBISHI KASEI KOGYO) 20-01-1984 (Cat. X)**

(73) Proprietor: **AMOCO CORPORATION**
**200 East Randolph Drive**
**Chicago Illinois 60601(US)**

(72) Inventor: **Brooks, Gary Thomas**
**5 S. 255 Radcliff**
**Naperville Illinois 60540(US)**

(74) Representative: **Ritter, Stephen David et al**
**Mathys & Squire 10 Fleet Street**
**London EC4Y 1AY(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.08/2.19/2.0)

## Description

BACKGROUND OF THE INVENTION

### Field of the Invention

The field of this invention relates to polyamide-imide copolymers containing polyetherimides and to molding powders, molded articles and films prepared therefrom.

### Background

Amide-imide copolymers are a relatively new class of organic compounds known for their solubility in nitrogen containing solvents when in the largely polyamide form. The major application of these amide-imide homopolymers has been as wire enamels. This is illustrated in U.S. Patents 3,661,832 (1972), 3,494,890 (1970), and 3,347,828 (1967). Amide-imide homopolymers are not useful in molding applications since parts made from them form fissures, and in general their molecular weight is too low. Amide-imide copolymers have also been found useful for molding applications as shown in U.S. Patents 4,016,140 (1977) and 3,573,260 (1971), U.S. 4,136,085 (1979), U.S. 4,313,868 (1982), and U.S. 4,309,528 (1982) which are incorporated herein by reference.

Amide-imide polymers and copolymers are also described in DE-A-2,150,435, US-A-4,224,294 and US-A-4,424,294.

These polyamide-imide copolymers are known for their outstanding strength, stiffness and heat resistance properties, but they are brittle materials. The art has been looking for improvements in the impact resistance and toughness of the polyamide-imide copolymer, but it is essential that an additive not impair the excellent curing characteristics of the polyamide-imide copolymers and its cured mechanical properties, particularly the flexural and heat deflection properties. The ideal toughening agent for these copolymers would be one which increases the toughness of the polymer, but does not reduce the polymer's strength, stiffness or heat deflection temperature.

WO-A-81/01568 describes polymeric blends comprising a polyamide-imide homopolymer derived from a single diamine reactant and certain polyether-imides. These blends have a glass transition temperature (Tg) which is below the glass transition temperature of the homopolymer.

A general object of this invention is to provide polyamide-imide copolymers suitable for use as engineering plastics, particularly for use in injection molding and film extrusion, and having improved toughness as measured by the Dart Impact test and improved melt ductility properties.

According to the present invention, there are provided injection moldable compositions having improved toughness when annealed at temperatures up to 500 °F (260 °C), comprising 10 to 30 percent by weight of a polyetherimide melt compounded with 90 to 70% by weight of a polyamide-imide copolymer, wherein said polyetherimide comprises repeating units of formula

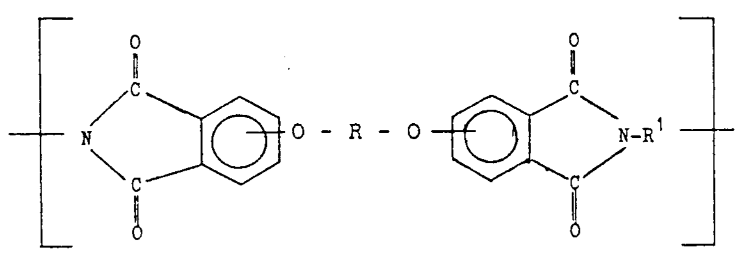

where R and $R^1$ are divalent organic radicals ( defined below) and said polyamide-imide copolymer comprises A units of

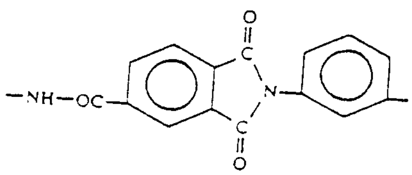

and B units of:

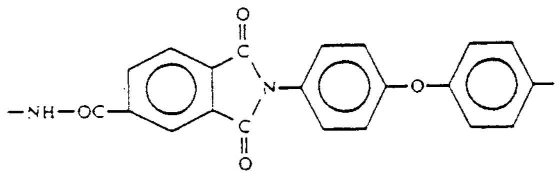

wherein the molar ratio of A units/B units is about 30/70.

Such compositions have improved toughness properties and can readily be injection molded or film extruded into high performance articles which have excellent properties once cured at temperatures up to 500 ° F (260 ° C). The polyetherimides improve the toughness of neat or filled amide-imide copolymers and also improves the copolymers when glass fibers, glass beads, mineral fillers, graphite fiber or graphite powder are coated with the polyetherimides. The filled and neat copolymers can be easily fabricated into molded amide-imide articles of manufacture.

The addition of polyetherimide can also have significant effects on the flow properties of the polyamide-imide; however, the flow improvements are dependent on the starting melt viscosity of the polyamide-imide and the shear forces the alloy encounters during fabrication. The greater the melt viscosity of the polyamide-imide, the greater the flow improvements are via alloying with polyetherimide. With high flow, low molecular weight polyamide-imides, the addition of a polyetherimide has little, if any, effect on reducing the melt viscosity at injection molding shear rates of the polyamide-imide and in some cases the polyamide-imide flow may be reduced if alloyed with polyetherimide. The addition of polyetherimide significantly reduces the melt viscosity and improves the melt ductility of the polyamide-imide at low shear rates thus allowing a thin film to be extruded.

The difference in flow results at high and low shear rates can be explained by comparing the shear rate vs. viscosity curves of the polyamide-imide with that of the polyetherimide. The polyamide-imide copolymer behaves as a power law fluid over a wide shear rate range; thus its viscosity response is similar at high and low shear rates. The neat polyetherimide viscosity approaches a Newtonian fluid at low shear rates and its viscosity is an order of magnitude less than the polyamide-imide. At high shear rates, the polyamide-imide and polyetherimide viscosity converge. Thus the addition of polyetherimide has little effect on the flow properties of the polyamide-imide at high shear rates (injection molding) but it has a significant effect on the polyamide-imide flow at lower shear rates (extrusion, compression molding, etc.).

The effectiveness of the polyetherimide as a flow aid for the polyamide-imide is dependent on the shear forces encountered during fabrication and the rheological characteristics of the polyamide-imide and polyetherimide, mainly their power law indices (flow behavior index), their constancy indices and their activation energy. Since polyamide-imides are reactive polymers their viscosity characteristics can change during fabrication. Thus, the effectiveness of the polyetherimide as a flow aid can also change whereby the alloy can have improved flow with residence time in the barrel during the molding process. This is an unobvious and unique feature of our novel composition since polyamide-imide flow properties usually decrease with residence time.

Suitable polyetherimides comprise essentially chemically combined units of the formula:

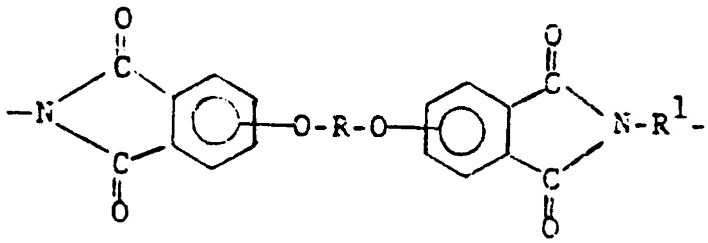

wherein R is selected from (a) the following divalent organic radicals:

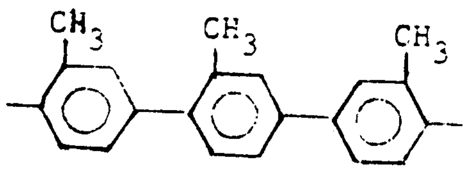

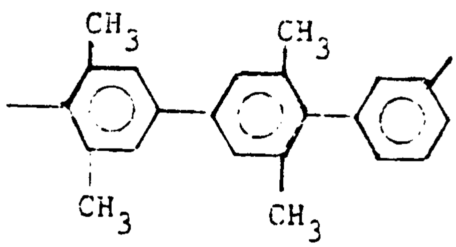

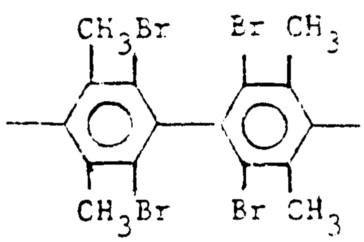

and 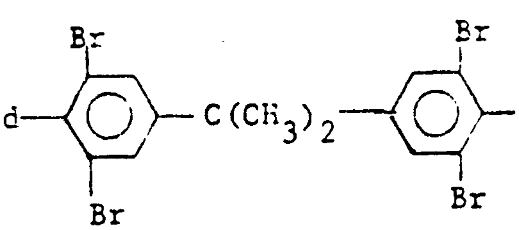

and (b) divalent organic radicals of the general formula:

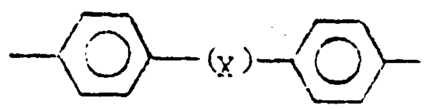

there X is $--C_yH_{2y}--$, y being a whole number equal to from 1 to 5 inclusive, and $R^1$ is a divalent organic radical selected from (a) aromatic hydrocarbon radicals having from 6-20 carbon atoms and halogenated derivatives thereof, (b) alkylene radicals and cycloalkylene radicals having from 2-20 carbon atoms, (c) $C_{(2-8)}$ alkylene terminated polydiorganosiloxanes, and (d) divalent radicals of the formula:

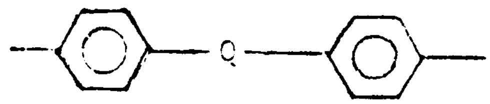

where Q is a member selected from the class consisting of:

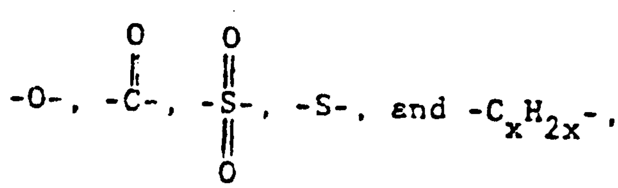

and x is a whole number equal to from 1 to 5, inclusive.

We have unexpectedly discovered that blends of polyamide-imide copolymers and polyetherimides disclosed herein over a wide range can be made in which the Dart Impact properties of the blend show a marked average improvement over the properties of the components of these blends. By making the above-described blends, the utility of both of these members in the blend can be considerably expanded. In addition, by blending the polyamide-imide with polyetherimides, products can be obtained which are lower in cost than is usually associated with the use of the polyamide-imides alone, without significant sacrifice of the polyamide-imides thermal properties.

The polyetherimides which are employed in the present invention can be made in accordance with the disclosures and teachings in U.S. Pat. No. 3,847,867 issued Nov. 12, 1974. The polyamide-imides employed in the practice of the instant invention can also be made in accordance with the disclosures and teachings in U.S. Pat. No. 4,136,085.

The amount of the polyetherimide added to the amide-imide copolymer is in the range of 10 to 30 weight percent. The polyetherimide is not completely miscible in our amide-imide copolymers, as determined by their blend glass transition temperatures (Tg). When polyetherimide loadings exceed 10 percent by polymer weight, a polyamide-imide rich and a polyetherimide rich phase is seen as illustrated by separate Tgs. The polyamide-imide Tg is slightly supressed at the higher blend levels even though a second, lower polyetherimide Tg is present. At polyetherimide loadings below approximately 10 percent, a single blend Tg is observed. This single Tg may be due to the sensitivity limits of the differential Scanning Calorimeter. For consistency purposes, the polyamide-imide/polyetherimide blends will be considered immiscible since they are not miscible over a wide blending range. When 20 weight percent of the polyetherimide was dry blended with our amide-imide copolymer and was molded, two single Tgs were found. The Tg of our amide-imide polymer used as a control was 266 ° C as molded while the polymer containing 20 percent by weight of polyetherimide had a glass transition temperature of about 256 ° C and a second glass transition temperature of about 220 ° C. After being cured at a temperature of 160 ° C to 260 ° C, the glass transition temperature for our control polyamide-imide polymer rose to 279 ° C and for the sample containing 20 percent polyetherimide rose to about 272 ° C for the first Tg and 220 ° C for the

second Tg. This increase in Tg during cure is critical since it indicates that imidization and solid state polymerization has occurred and it is during this post cure step that the amide-imide chains grow and build their excellent mechanical and thermal properties.

To build amide-imide properties, parts are annealed at temperatures up to about 530 ° F (277 ° C) but preferably 500 ° F (260 ° C). Since the polyetherimides are immiscible in the polyamide-imide copolymers over a wide blending range, the polyamide-imide Tg remains above the maximum cure temperature allowing excellent curing even though the blend contains high loadings of polyetherimide. It is important that the polyamide-imide Tg is above the maximum annealing temperatures so that part distortion due to stress relaxation does not occur.

Polyetherimides coated on sized fillers, such as glass fibers can be molded into intricate parts via injection molding. The coated polyetherimide fibers can improve our polyamide-imide melt stability thus its flow at longer cycle times. This allows for higher filler content without restricting the flow. Thus polyamideimide copolymers, containing 20 to 60 percent filler can be made without loss of the excellent physical properties of our amide-imide copolymers.

The polyamide-imide copolymers of this invention are prepared by reacting an acyl halide derivative of an aromatic tricarboxylic-acid-anhydride (trimelitic acid) with two aromatic primary diamines (m-phenylene diamine and oxy-bisaniline). The resuting products are polyamides wherein the linking groups are predominantly amide groups, although some may be imide groups, and wherein the structure contains free carboxylic acid groups which are capable of further reaction. Such polyamides are moderate molecular weight (7-13,000 as prepared) polymeric compounds having, in their molecule, units of:

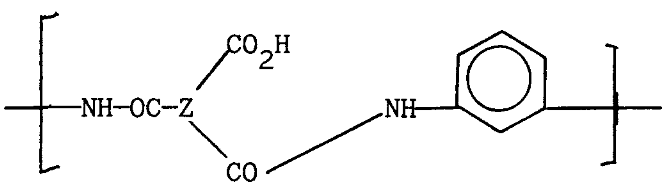

and units of

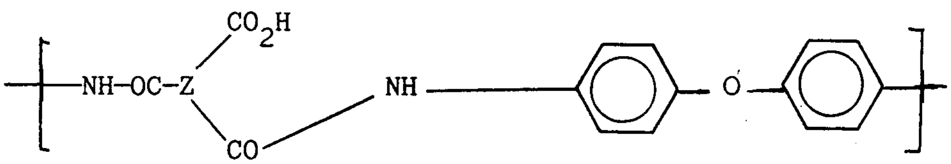

Said polyamides are capable of substantially complete imidization by heating, by which they form the polyamide-imide structure having, to a substantial extent, reoccurring units of:

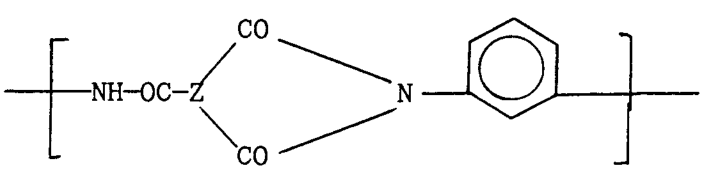

and units of

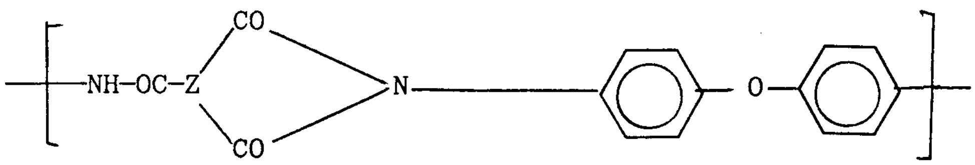

The aromatic nature of the diamines provides the excellent thermal properties of the homopolymer copolymers while the primary amine groups permit the desired imide rings and amide linkages to be formed.

Usually the copolymerization is carried out in the presence of a nitrogen-containing organic polar solvent, such as N-methyl-pyrrolidone, N,N-dimethylformamide and N,N-dimethylacetamide. The reaction should be carried out under substantially anhydrous conditions and at a temperature below about 150 ° C. Most advantageously, the reaction is carried out from about 20 ° C to about 50 ° C.

The reaction time is not critical and depends primarily on the reaction temperature. It may vary from about 1 to about 24 hours, with about 2 to 4 hours at about 30 ° C to 50 ° C preferred for the nitrogen-containing solvents.

Cavity pressure measurements are used as quality control checks of polyamide-imide resin viscosity. Pressure buildup during the filling of an injection molded part is measured at a point in the cavity (ejector pin). This is accomplished by placing a pressure transducer behind the ejector pin and recording the pressure with a chart recorder or other readout device. Cavity pressure normally rises as the mold is being filled and peaks as the molten resin is packed into the cavity. As the resin solidifies, cavity pressure decreases.

We have found that resins that have low cavity pressure process poorly and that spiral flow measurements were not sensitive enough to discriminate between resins in the viscosity range of interest. Low cavity pressures indicate a large pressure drop between injection and cavity pressures. This indicates higher resin viscosities. In the same manner high cavity pressures indicate less pressure change between injection and cavity pressures, suggesting lower resin viscosities.

Amide-imide polymer and copolymer viscosities had been measured by spiral flow determinations previous to the implementation of the cavity pressure procedure, see U.S. Patent 4,224,214. Cavity pressure was selected over spiral flow because of its greater sensitivity. The cavity pressure test has been implemented as an amide-imide homopolymer and copolymer quality control procedure. Like spiral flow, cavity pressure is a test that can be done conveniently in a molder's shop.

The injection molding machine was equipped with a horizontally mounted thermoset screw and barrel assembly. The mold was heated with hot oil from a Mokon Model 105-057 heating unit. Cavity pressure was recorded with a Control Process Model 241 recorder. The mold was equipped to handle pressure transducers at the ejector pins located at the gate end of the tensile bar and the gate end of the flex bar before we began our work. Since it was desirable to make cavity pressure measurements at the dead end of the flex bar, it was necessary to make some modifications in the mold base to accommodate a transducer at this pin position.

Resins were dried in a desiccant hot air circulating oven at 300 ° F (149 ° C) for at least 16 hours before testing. Moisture in amide-imide homopolymer and copolymers has a very significant effect on their flow properties; therefore, special care was taken to be sure the samples were properly dried. This drying procedure was used before making flow rate and cavity pressure measurements.

The flow rate procedure was patterned after the standard method described in ASTM D1238. A 335 ° C (635 ° F) barrel temperature with a 30 minute preheat time was used. This is about the largest set of weights that can be used safely with the standard extrusion plastometer apparatus. A standard 0.0825 in (1.5 mm) diameter, and a 0.315 in. (8 mm) long orifice was used.

Special care was taken to be sure that each flow rate measurement was started when an equivalent volume of resin was in the barrel. Previous rheology work indicated that there is a very large "barrel height" effect on amide-imide copolymers. Each flow rate measurement was initiated while the top of the piston collar was between the two scribe marks on the piston. This precaution is also required by ASTM in method D1238.

It has been found that the amide-imide copolymers are improved by the addition of polyetherimides coated or sized reinforcing material; particularly the mechanical properties of the polyimides are improved if these copolyimides contain from about 20 to 60 percent by weight glass fibers, glass beads, industrial materials such as talc, or graphite or mixtures thereof. In the preferred range the polyimides contain 30 to 40 percent by weight of the glass fibers, glass beads, talc or graphite or mixtures thereof. Suitable reinforcing materials can be glass fibers, glass beads, glass spheres, and glass fabrics. The glass fibers are made of alkali-free, boron-silicate glass or alkali-containing C-glass. The thickness of the fiber is suitably on the average between 0.003 mm and 0.03 mm. It is possible to use both long fibers with average lengths of from 1.5 to 15 mm and also short fibers of an average filament length from 0.05 to 5 mm. In principle, any standard commercial-grade fibers, especially glass fibers, may be used. Glass beads ranging from 0.005 mm to 0.8 mm in diameter may also be used as a reinforcing material.

The reinforced polyamide-imide copolymers may be prepared in various ways. For example, so-called roving endless glass fiber strands are coated with the polyetherimide disclosed herein and then are further coated with the polyamic acid melt and subsequently chopped. The chopped fibers or the glass beads coated with polyetherimide may also be mixed with granulated polyamic acid and the resulting mixture melted in a conventional extruder, or alternatively the fibers coated with polyetherimide may be directly introduced into the polyamic acid melt through a suitable inlet in the extruder. Injection molding of the unfilled or glass-filled copolyamide-imides is accomplished by injecting the copolyamide-imides into a mold maintained at a temperature of about 350°F to 450°F. (177-232°C) In this process a 15 to 30 second cycle is used with a barrel temperature of about 580°F to 640°F (304-338°C). The injection molding conditions are given in Table 1.

The polyamide-imide referred to is that produced in Example I below. The polyetherimide is that sold under the Trade Mark ULTEM 1000 by General Electric Company

Table 1

| | Set Points |
|---|---|
| Cylinder Temperature °C (°F) | |
| Nozzle | 332 - 349 (630-660) |
| Front Zone | 332 - 349 (630-660) |
| Rear Zone | 160 - 343 620-650 |
| Timer (seconds) | |
| Clamp Closed (cure) | 18 |
| Injection Hold | 6 |
| Booster (Inj. Hi) | 2 |
| Cycle Delay (open) | 1 |
| High-Low | 2 |
| Injection Pressure MPa (psi) | |
| High | 138 (20,000) |
| Low | 69 (10,000) |
| Machine Settings | |
| Clamp Pressure | Max. |
| Injection Rate | Max. |
| Screw RPM | 50 |
| Feeding Setting | As Req'd. |
| Cushion | 1/4" (6.35mm) |
| Back Pressure (psi) | 220 |
| Mold Temperature °C (°F) | |
| Stationary | 232 (450) |
| Movable | 232 (450) |
| Hopper Drier | 104 (220) |

The mechanical properties of the unfilled amide-imide copolymers containing polyetherimides (melt compounded) and also the filled amide-imide copolymers are given in Table 2 and it shows that these copolymers have excellent mechanical and thermal properties despite the fact that they contain 5 to 40 weight percent of polyetherimide. The polyamide-imide copolymer toughness as measured by Dart Impact is significantly improved by the addition of about 0.1 to about 50 percent by weight of polyetherimide as shown in Table 2. The polyamide-imide/polyetherimide blends were molded at 660° F (660° C).

Table 2 (Imperial units)

| | | | | | | |
|---|---|---|---|---|---|---|
| % Polyamide-imide | 96.5 | 86.9 | 77.2 | 67.6 | 57.9 | 0 |
| % Polyetherimide | -- | 9.6 | 19.3 | 28.9 | 38.6 | 100 |
| % $TiO_2$ | 3.0 | 3.0 | 3.0 | 3.0 | 3.0 | -- |
| % PTFE | 0.5 | 0.5 | 0.5 | 0.5 | 0.5 | -- |
| % Glass Fiber PPG-3540 | -- | -- | -- | -- | -- | -- |
| % Graphite Fibers AS1810 | -- | -- | -- | -- | -- | -- |
| Physical Properties | | | | | | |
| Tensile Strength $X10^3$PSI | | | | | | |
| As-Molded | 10.9 | 12.9 | 12.2 | 11.5 | 11.1 | 15.2 |
| Cured @ 500°F Yield | None | None | 21.6 | 19.5 | 19.8 | NR |
| Cured @ 500°F Break | 26.9 | 22.2 | 20.9 | 18.7 | 19.2 | NR |
| Tensile Elongation % | | | | | | |
| As-Molded | 3.3 | 4.4 | 4.1 | NR | 3.9 | 60 |
| Cured @ 500°F Yield | None | None | 13.8 | 12.6 | 10.9 | NR |
| Cured @ 500°F Break | 17.3 | 24.5 | 25.7 | 22.3 | 18.1 | NR |
| Flexural Modulus $X10^6$PSI | | | | | | |
| As-Molded | 0.78 | 0.68 | 0.68 | 0.64 | 0.63 | 0.48 |
| Cured @ 500°F | 0.72 | 0.66 | 0.62 | 0.63 | NR | NR |
| Flexural Strength $X10^3$PSI | | | | | | |
| As-Molded | 20.0 | 17.9 | 18.0 | 16.0 | 13.2 | 27.4 |
| Cured @ 500°F | 35.4 | 30.9 | 30.2 | 28.4 | NR | NR |
| Izod Impact, Notched ft-lbs/in | | | | | | |
| As-Molded | 0.5 | 0.8 | 0.8 | 0.7 | NR | 1.0 |
| Cured @ 500°F | 2.6 | 2.6 | 2.5 | 2.8 | NR | NR |
| Dart Impact, in-lbs | | | | | | |
| As-Molded | 0.8 | 1.1 | 1.1 | 1.1 | NR | 4.5 |
| Cured @ 500°F | 15.5 | 22.3 | 62.0 | 48.3 | NR | NR |
| HDT, °F | | | | | | |
| As-Molded | 457 | 452 | 439 | 429 | 418 | 392 |
| Cured | 530 | 522 | 515 | 506 | NR | NR |
| Flexural Strength $X10^3$PSI | | | | | | |
| @ 400°F | 19.8 | 18.4 | 17.5 | 14.9 | NR | 5.6 |
| @ 450°F | 16.2 | 15.3 | 13.0 | 8.9 | NR | 0 |

Table 2 (Cont'd)

| | | | | | | |
|---|---|---|---|---|---|---|
| % Polyamide-imide | 69 | 64.8 | 60 | 55.2 | 65.5* | 0 |
| % Polyetherimide | -- | 7.2 | 15 | 13.8 | 3.5 | 70 |
| % $TiO_2$ | -- | -- | -- | -- | -- | -- |
| % PTFE | 1.0 | 1.0 | 1.0 | 1.0 | 1.0 | -- |
| % Glass Fiber PPG-3540 | 30 | 27 | 24 | 30 | 30 | 30 |
| % Graphite Fibers AS1810 | -- | -- | -- | -- | -- | -- |
| Physical Properties | | | | | | |
| Tensile Strength $X10^3$PSI | | | | | | |
| As-Molded | 20.6 | 20.2 | 20.4 | 20.7 | 17.4 | 24.5 |
| Cured @ 500°F Yield | None | ----- | ----- | ----- | ----- | None |
| Cured @ 500°F Break | 30.0 | 29.9 | 27.0 | 26.4 | 28.2 | NR |
| Tensile Elongation % | | | | | | |
| As-Molded | 4.8 | 5.0 | 5.0 | 5.6 | 4.0 | 3.0 |
| Cured @ 500°F Yield | None | ----- | ----- | ----- | ----- | None |
| Cured @ 500°F Break | 7.9 | 8.5 | 7.8 | NR | 6.4 | NR |
| Flexural Modulus $X10^6$PSI | | | | | | |
| As-Molded | 1.60 | 1.46 | 1.33 | 1.53 | 1.52 | 1.20 |
| Cured @ 500°F | 1.55 | 1.41 | 1.24 | 1.41 | 1.52 | NR |
| Flexural Strength $X10^3$PSI | | | | | | |
| As-Molded | 30.9 | 29.7 | 26.0 | 29.3 | NR | 33.3 |
| Cured @ 500°F | 42.3 | 41.6 | 39.7 | 42.5 | NR | NR |
| Izod Impact, Notched ft-lbs/in | | | | | | |
| As-Molded | 1.0 | 1.1 | 0.9 | 1.1 | 1.35 | 2.0 |
| Cured @ 500°F | 1.5 | 1.6 | 1.8 | 1.8 | 2.1 | NR |
| Dart Impact, in-lbs | | | | | | |
| As-Molded | NR | NR | NR | NR | NR | 4.8 |
| Cured @ 500°F | 10.5 | 11.1 | NR | 12.8 | NR | NR |
| HDT, °F | | | | | | |
| As-Molded | 484 | 485 | 463 | 480 | 460 | 410 |
| Cured | 529 | 524 | 519 | 527 | 524 | NR |
| Flexural Strength $X10^3$PSI | | | | | | |
| @ 400°F | 29.3 | 29.8 | 28.3 | NR | 25.3 | 12.5 |
| @ 450°F | 24.3 | 25.1 | 23.7 | NR | NR | NR |

Table 2 (Cont'd)

| | | |
|---|---|---|
| % Polyamide-imide | 69 | 55.2 |
| % Polyetherimide | -- | 13.8 |
| % $TiO_2$ | -- | -- |
| % PTFE | 1.0 | 1.0 |
| % Glass Fiber PPG-3540 | -- | -- |
| % Graphite Fibers AS1810 | 30 | 30 |
| Physical Properties | | |
| Tensile Strength $X10^3$PSI | | |
| As-Molded | 17.1 | 20.3 |
| Cured @ 500°F Yield | None | None |
| Cured @ 500°F Break | 33.2 | 33.5 |
| Tensile Elongation % | | |
| As-Molded | 5.0 | 5.4 |
| Cured @ 500°F Yield | None | None |
| Cured @ 500°F Break | 8.1 | 8.0 |
| Flexural Modulus $X10^6$PSI | | |
| As-Molded | 2.05 | 2.28 |
| Cured @ 500°F | 2.30 | 2.57 |
| Flexural Strength $X10^3$PSI | | |
| As-Molded | 29.8 | 35.6 |
| Cured @ 500°F | 54.6 | 52.3 |
| Izod Impact, Notched ft-lbs/in | | |
| As-Molded | 0.9 | 1.0 |
| Cured @ 500°F | 1.4 | 1.4 |
| Dart Impact, in-lbs | | |
| As-Molded | -- | -- |
| Cured @ 500°F | -- | -- |
| HDT, °F | | |
| As-Molded | 490 | 478 |
| Cured | 542 | 525 |
| Flexural Strength $X10^3$PSI | | |
| @ 400°F | NR | NR |
| @ 450°F | NR | NR |

Table 2 (repeated showing equivalent S.I. units)

| | | | | | | |
|---|---|---|---|---|---|---|
| % Polyamide-imide | 96.5 | 86.9 | 77.2 | 67.6 | 57.9 | 0 |
| % Polyetherimide | -- | 9.6 | 19.3 | 28.9 | 38.6 | 100 |
| % $TiO_2$ | 3.0 | 3.0 | 3.0 | 3.0 | 3.0 | -- |
| % PTFE | 0.5 | 0.5 | 0.5 | 0.5 | 0.5 | -- |
| % Glass Fiber PPG-3540 | -- | -- | -- | -- | -- | -- |
| % Graphite Fibers AS1810 | -- | -- | -- | -- | -- | -- |
| Physical Properties | | | | | | |
| Tensile Strength MPa | | | | | | |
| As-Molded | 75 | 89 | 84 | 79 | 77 | 105 |
| Cured @ 260°C Yield | None | None | 150 | 134 | 137 | NR |
| Cured @ 260°C Break | 185 | 153 | 144 | 129 | 132 | NR |
| Tensile Elongation % | | | | | | |
| As-Molded | 3.3 | 4.4 | 4.1 | NR | 3.9 | 60 |
| Cured @ 260°C Yield | None | None | 13.8 | 12.6 | 10.9 | NR |
| Cured @ 260°C Break | 17.3 | 24.5 | 25.7 | 22.3 | 18.1 | NR |
| Flexural Modulus MPa | | | | | | |
| As-Molded | 5377 | 4688 | 4688 | 4412 | 4343 | 3309 |
| Cured @ 260°C | 4964 | 4500 | 4274 | 4343 | NR | NR |
| Flexural Strength MPa | | | | | | |
| As-Molded | 138 | 123 | 124 | 110 | 91 | 189 |
| Cured @ 260°C | 244 | 213 | 208 | 196 | NR | NR |
| Izod Impact, Notched J/m | | | | | | |
| As-Molded | 267 | 426 | 426 | 373 | NR | 533 |
| Cured @ 260°C | 1386 | 1386 | 1333 | 1492 | NR | NR |
| Dart Impact, Nm | | | | | | |
| As-Molded | 0.088 | 0.121 | 0.121 | 0.121 | NR | 0.495 |
| Cured @ 260°C | 1.7 | 2.5 | 6.8 | 5.3 | NR | NR |
| HDT, °C | | | | | | |
| As-Molded | 236 | 233 | 226 | 221 | 214 | 200 |
| Cured | 277 | 272 | 268 | 263 | NR | NR |
| Flexural Strength MPa | | | | | | |
| @ 204°C | 137 | 127 | 121 | 103 | NR | 39 |
| @ 232°C | 112 | 105 | 90 | 61 | NR | 0 |

Table 2 (Cont'd)

| | | | | | | |
|---|---|---|---|---|---|---|
| % Polyamide-imide | 69 | 64.8 | 60 | 55.2 | 65.5* | 0 |
| % Polyetherimide | -- | 7.2 | 15 | 13.8 | 3.5 | 70 |
| % $TiO_2$ | -- | -- | -- | -- | -- | -- |
| % PTFE | 1.0 | 1.0 | 1.0 | 1.0 | 1.0 | -- |
| % Glass Fiber PPG-3540 | 30 | 27 | 24 | 30 | 30 | 30 |
| % Graphite Fibers AS1810 | -- | -- | -- | -- | -- | -- |
| Physical Properties | | | | | | |
| Tensile Strength MPa | | | | | | |
| As-Molded | 142 | 139 | 141 | 143 | 120 | 169 |
| Cured @ 260°C Yield | None | ------ | ------ | ------ | ------ | None |
| Cured @ 260°C Break | 207 | 206 | 186 | 182 | 194 | NR |
| Tensile Elongation % | | | | | | |
| As-Molded | 4.8 | 5.0 | 5.0 | 5.6 | 4.0 | 3.0 |
| Cured @ 260°C Yield | None | ------ | ------ | ------ | ------ | None |
| Cured @ 260°C Break | 7.9 | 8.5 | 7.8 | NR | 6.4 | NR |
| Flexural Modulus MPa | | | | | | |
| As-Molded | 11030 | 10065 | 9169 | 10547 | 10478 | 8272 |
| Cured @ 260°C | 10685 | 9652 | 8549 | 9721 | 10478 | NR |
| Flexural Strength MPa | | | | | | |
| As-Molded | 213 | 204 | 179 | 202 | NR | 230. |
| Cured @ 260°C | 292 | 287 | 274 | 293 | NR | NR |
| Izod Impact, Notched J/m | | | | | | |
| As-Molded | 533 | 586 | 480 | 586 | 720 | 1066 |
| Cured @ 260°C | 800 | 853 | 959 | 959 | 1119 | NR |
| Dart Impact, Nm | | | | | | |
| As-Molded | NR | NR | NR | NR | NR | 0.53 |
| Cured @ 260°C | 1.1 | 1.2 | NR | 1.4 | NR | NR |
| HDT, | | | | | | |
| As-Molded | 251 | 252 | 239 | 249 | 238 | 210 |
| Cured | 276 | 273 | 271 | 275 | 273 | NR |
| Flexural Strength MPa | | | | | | |
| @ 204°C | 202 | 205 | 195 | NR | 174 | 86 |
| @ 232°C | 167 | 173 | 163 | NR | NR | NR |

Table 2 (Cont'd)

| | | |
|---|---|---|
| % Polyamide-imide | 69 | 55.2 |
| % Polyetherimide | -- | 13.8 |
| % $TiO_2$ | -- | -- |
| % PTFE | 1.0 | 1.0 |
| % Glass Fiber PPG-3540 | -- | -- |
| % Graphite Fibers AS1810 | 30 | 30 |
| Physical Properties | | |
| Tensile Strength MPa | | |
| As-Molded | 118 | 140 |
| Cured @ 260°C Yield | None | None |
| Cured @ 260°C Break | 229 | 231 |
| Tensile Elongation % | | |
| As-Molded | 5.0 | 5.4 |
| Cured @ 260°C Yield | None | None |
| Cured @ 260°C Break | 8.1 | 8.0 |
| Flexural Modulus MPa | | |
| As-Molded | 14132 | 15718 |
| Cured @ 260°C | 15856 | 17717 |
| Flexural Strength MPa | | |
| As-Molded | 205 | 245 |
| Cured @ 260°C | 376 | 361 |
| Izod Impact, Notched | | |
| As-Molded | 480 | 533 |
| Cured @ 260°C | 746 | 746 |
| Dart Impact, | | |
| As-Molded | -- | -- |
| Cured @ 260°C | -- | -- |
| HDT, °C | | |
| As-Molded | 254 | 248 |
| Cured | 283 | 274 |
| Flexural Strength | | |
| @ 204°C | NR | NR |
| @ 232°C | NR | NR |

NOTE: Polyamide-imide and its blends were cured 1 day @ 204°C, 232°C, 241°C, 249°C (@ 400°F, 450°F, 465°F, 480°F) and 3 days @ 500°F. (260°C) Polyetherimide was not cured since its cured and as-molded properties are similar. Polyetherimide cannot withstand a 500°F (260°C) cure without distorting.

NR = Not Run

* Sample was a physical blend, the remaining blends were melt blended on a ZSK-30 Werner Pfleider twin screw extruder.

To adequately differentiate the molded part toughness of the copolymers, its alloys, and other high performance polymers, a Dart Impact Test procedure has been developed. The test fixture is designed to fully restrain the elliptical 60 mil plaque while the dart radius and dart weight are 0.5 inches (13 mm) and 1.33 pounds (0.6 Kg), respectively. The dart weight can be increased to 7.2 pounds (3.2 Kg), and it can be dropped from a height of 6 feet (1.8 m). The purpose of a light weight dart is to increase the test sensitivity which is necessary when studying polymers which tend to become brittle. A clear plastic (Plexiglass) 4 inch inside diameter tube is used to guide the Dart and an electromagnetic holder is used to raise the Dart. By turning the electrical power off to the electro magnetic holder, the Dart is dropped onto the plaque from various heights.

All of the materials studied were molded on the 10 oz. Stokes injection molder under Table I molding conditions unless specified otherwise. A 10 oz. (0.28 Kg) Stokes injection molder is fitted with a 1:1 compression thermoset screw which can hold approximately 365 grams of amide-imide copolymer (approximately 0.8 lbs.). Since each test tree weighs approximately 23 grams (neat parts) only 1/16th of the complete injection stroke (shot volume) is used during the molding evaluation. Under these conditions (18 second clamp), the total time the polymer is trapped in the barrel is approximately 7.2 minutes (total cycle is 27 seconds). This does not mean that the polymer is in the melt state for the complete 7.2 minutes due to the temperature gradient (front to rear) in the barrel. For a complete material transition (purge) 16-20 shots must be taken before collecting data.

Amide-imide copolymer flow, under molding conditions is determined by its cavity pressure which is measured at a point farthest from the sprue. In this test, a pressure transducer is fitted behind a knockout point located behind the flex bar. The higher the cavity pressure, the better the flow thus making for easier mold filling. To determine our amide-imide copolymer reactivity a plot of cavity pressure vs. cycle time is drawn. A stable or non-reactive resin will exhibit good flow characteristics under adverse molding conditions. A reactive polymer will be cycle time dependent in that its viscosity increases with cycle time. This is illustrated by a steep negative cavity pressure slope. Amide-imide polymer and copolymer samples were all dried for approximately 16 hours at 300 ° F (149 ° C) in a hot air circulating oven containing a suitable desiccant. The polyetherimides were dried overnight in a vacuum oven at 230 ° F (110 ° C). Samples were dry blended together and stored under vacuum in sealed containers.

Amide-imide copolymer samples were cured in a Blue M hot air programmable oven under a 7-day cycle with 1 day at 204 ° C, 232 ° C, 241 ° C, 249 ° C (at 400 ° F, 450 ° F, 465 ° F, 480 ° F) and 3 days at 500 ° F (260 ° C). Thin films from 0.5 to 10 mils can be extruded from the polyamide-imide/polyetherimide blends. These films have excellent properties as illustrated in Table 3. Films were prepared in a Werner Pfleider ZSK-30 twin screw extruder and samples were collected at different take-off speeds. The polyamide-imide copolymer/polyetherimide blend exhibited good melt ductivity and flow properties allowing a thin, tough fill

to be extruded. The films were tensile tested and they exhibited a yield point indicating ductility. The films could be cured at 500 ° F (260 ° C) without distorting.

Table 3

80/20 Polyamide-imide Copolymer/Polyetherimide

| | | |
|---|---|---|
| Film Gauge | 9 | 10 |
| Yield Tensile Strength PSI (MPa) | | |
| MD | 18,420 (127) | 19,330 (133) |
| TD | 17,160 (118) | 18,640 (129) |
| Break Tensile Strength PSI | | |
| MD | 18,150 (125) | 18,840 (130) |
| TD | 16,900 (117) | 17,890 (123) |
| Yield Tensile Elongation % | | |
| MD | 9.1 | 9.5 |
| TD | 8.2 | 9.2 |
| Break Tensile Elongation % | | |
| MD | 15.0 | 16.0 |
| TD | 16.6 | 11.5 |
| Tensile Modulus PSI (MPa) | | |
| MD | 402,300 (2786) | 411,300 (2836) |
| TD | 409,600 (2824) | 400,400 (2760) |

A preferred class of polyetherimides which are included by formula (II) are polymers consisting essentially of from about 2 to 5000 or more units and preferably from 5 to 100 units of the formula:

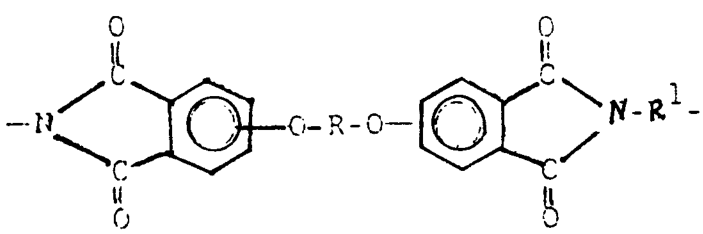

wherein $R^1$ is previously defined, and R is:

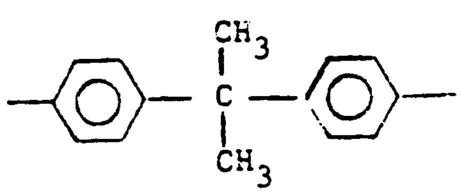

Included by the polyetherimides of formula II, are polymers consisting essentially of the following chemically combined units:

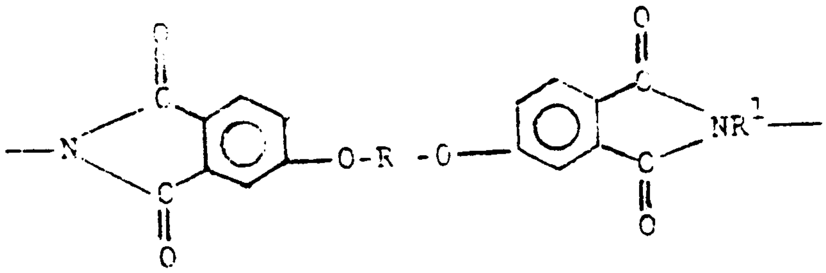

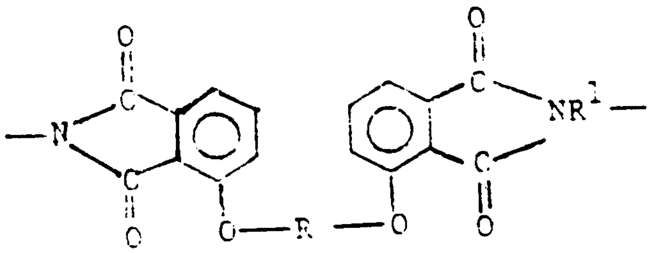

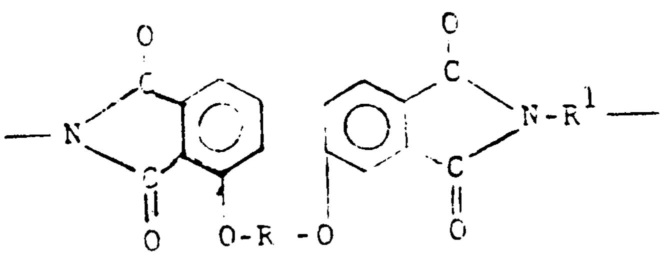

and mixtures thereof, where R and $R^1$ are defined above.

The polyetherimides of formulas II-VI can be made by effecting reaction between an aromatic bis-(etheranhydride) of the general formula:

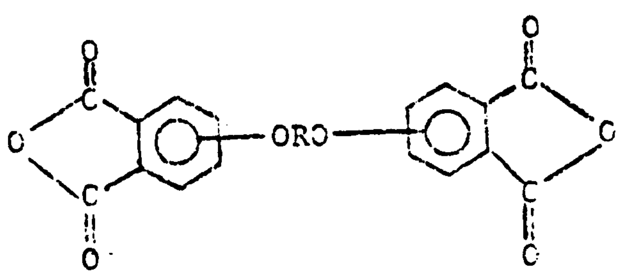

and an organic diamine of the general formula:

$H_2NR^1NH_2$

wherein R and $R^1$ are as previously defined.

There can be employed from 0.95 to 1.05 mols of aromatic bis(etheranhydride) per mol of organic diamine.

In making the polyetherimides, there are employed from 0.95 to 1.05 moles of the aromatic dianhydride of formula VII per mol of the organic diamine of formula VIII. Preferably, one can employ equal or lower amounts of the bisanhydride and diamine.

The aromatic bis(etheranhydride) of formula VII shown in the above-mentioned U.S. Pat. No. 3,847,867, can be prepared from the hydrolysis followed by dehydration of the reaction product of the nitrosubstituted phenyl dinitrile and then reaction with a dialkali metal salt of a dihydric aryl compound in the presence of a dipolar aprotic solvent, where the alkali metal salt has the general formula:

Alk-O-$R^1$-O-Alk

wherein $R^1$ has the meanings given above and preferably is the same as $R^2$ and Alk is an alkali metal ion. Various well-known procedures can be used to convert the resulting tetranitriles to the corresponding tetracids and dianhydrides.

The amount of the polyetherimide added to the polyamide-imide copolymer according to the invention is in the range of 10 to 30 weight percent.

The following examples illustrate the preferred embodiment of the invention. It will be understood that the examples are for illustrative purposes only and do not purport to be wholly definitive with respect to conditions or scope of the invention.

EXAMPLE I

A 200 ml, round-bottom, 4-neck flask, equipped with a nitrogen inlet tube, stirrer, thermometer, and solids addition funnel, was charged with 99.9 parts by weight of (pbw) p,p'-oxybis(aniline) (OBA), 23.1 pbw metaphenylenediamine (MPDA) and 604 pbw N-methylpyrrolidone (NMP). When solution at room temperature 22°C (72°F) was complete, 142.5 pbw 4-trimellitoyl anhydride chloride (4-TMAC), having a percent purity of 99.5 percent ± 0.5 percent as determined from chloride content and 6.8 pbw of trimellitic acid anhydride (TMA) was added over 2.5 hours while maintaining a solution temperature of between about 25-35°C (77-95°F). When addition was complete the solution was stirred for 3 hours during which time the solution viscosity increased to a Gardner-Holdt value of Z5 + or about 110 poises (1100 Pa. sec).

Solid polymer was obtained by first pouring the viscous solution into twice its volume of distilled water in a Waring blender and then filtering. The filtrate was washed with 5 increments of 3000 pbw each of distilled water to remove hydrogen chloride that had been generated during reaction.

The solid was dried under a vacuum of 20 inches of mercury (56 KPa) for 24 hours at 122°F (50°C). The above material was heated for 2 hours in an oven set at 450°F (232°C) to give the final product.

EXAMPLE II

A 78 gram amount of the copolymer in powdered form made according to the procedure set forth in Example I was heated at 550°F (288° C) for about 1 hour. It was then cooled and charged cold into a mold preheated in the press to about 600°F to about 650°F (316-343°C). A maximum pressure of 4,200 psi (29 MPa) was applied over a 25 minute period and thereafter the mold and contents cooled to 500°F (260°C under a pressure of 2,100 psi (14 MPa) and the molded item was immediately ejected. A disk measuring 5 1/2 inches (140 mm) in diameter and 1/8 inch (3 mm) had been formed.

EXAMPLE III

Polyamide-imide/polyetherimide blends can be prepared by physically blending the constituents together, either pellet to pellet, powder to powder, powder to pellet, or pellet to powder with or without a compounding step prior to injection molding or film extruding. It is preferred that the constituents are melt compounded; especially using a twin screw extruder.

The filled polyamide-imide/polyetherimide blends can be prepared as described above or the polyetherimide can be dissolved in a solvent and spray coated or dip coated on the filter and/or reinforcement (graphite fibers, glass fibers, and mineral fillers).

In the following Examples the polyamide-imide polymer of Example I was blended with a commercially available polyetherimide sold under The Trade Mark ULTEM 1000 by General Electric Company.

EXAMPLE IV

Polyamide-imide/polyetherimide powder blends, ranging in concentration from 95/5 to 5/95, were melt homogenized in a Brabender measuring head for 6 minutes at 340°C and torque measurements were recorded. A sample of the melt blends were also submitted for an inherent viscosity after 6 minutes of mixing. Table 4 reports the results. The alloy inherent viscosity vs. blend concentration follows the law of mixtures where the curve falls in the lower envelope of the additive profile region. The addition of 10 percent, 20 percent and 30 percent by weight of polyetherimide reduces the polyamide-imide mixing torque by 17%, 30% and 59%, respectively. This clearly illustrates the significant effect that polyetherimide has on reducing the melt viscosity of polyamide-imide copolymers when fabricated under low shear condition.

Table 4

| Polyamide-Imide/Polyetherimide Blends Brabender Mixing Study | | | |
|---|---|---|---|
| Blend Composition (PAI/PEI) | Melt Temp. °C | Torque Newton-Meters | I.V. After 6 Min. of Mixing, dl/g |
| 100/ 0 | 367 | 75 | 1.12 |
| 95/ 5 | 364 | 70 | 0.87 |
| 90/ 10 | 362 | 62 | 0.80 |
| 80/ 20 | 362 | 52 | 0.85 |
| 70/ 30 | 350 | 31 | 0.71 |
| 60/ 40 | 346 | 29 | 0.68 |
| 50/ 50 | 341 | 24 | 0.60 |
| 40/ 60 | 342 | 18 | 0.60 |
| 30/ 70 | 341 | 17 | 0.55 |
| 20/ 80 | 339 | 18 | 0.55 |
| 10/ 90 | 341 | 16 | 0.52 |
| 5/ 95 | 336 | 17 | 0.47 |
| 0/100 | 340 | 15 | 0.44 |
| Mixing Speed 47 RPM<br>Set Temperatures of Measuring Head 340°C | | | |

EXAMPLE V

The addition of 10, 20, and 30 weight percent of polyetherimide had little, if any, effect on improving the cavity pressure (flow) of a neat polyamide-imide under standard Q.C. molding conditions as illustrated in Table V. This may be explained by the converging rheology curves of these polymers at injection molding shear rates. At 660°F (349°C), the addition of 5 and 10 percent by polymer weight of polyetherimide improved the cycle time stability of a 30 percent glass filled polyamide-imide. This increase in melt stability was determined by plotting cavity pressure vs. cycle time. The alloys exhibited no signs of a flow decrease with increasing residence time (18 sec to 150 sec), which is unlike the typical behavior of a glass filled polyamide-imide.

Table 5

| PAI/PEI Blend | Cavity Pressures PSI (MPa) |
|---|---|
| 100/ 0 | 16,500 (114) |
| 90/10 | 14,500 (100) |
| 80/20 | 14,100 (97) |
| 70/30 | 14,900 (103) |

EXAMPLE VI

The addition of 10 and 20 weight percent of polyetherimide improves the polyamide-imide toughness properties as determined by a 30% to 50% increase in ultimate tensile elongation. At polyetherimide loadings of 20%, 30% and 40%, the neat polyamide-imide copolymer blend exhibited a yield point on the stress/strain curve. The yield elongation of these polyamide-imide copolymer/polyetherimide blends are approximately one half that of the ultimate elongation. A yield point on a stress/strain curve is uncharacteristic of a polyamide-imide molded part and a major advantage of these polyamide-imide copolymer/polyetherimide alloys since the lack of toughness has excluded polyamide-imides from many high performance applications. The addition of polyetherimide did not reduce the notch sensitivity of the polyamide-imide even though the polyetherimide has approximately 40 percent of the notched Izod impact resistance of the polyamide-imide copolymer. The remaining strength, stiffness and heat deflection temperatures of the polyamide-imide copolymer/polyetherimide blends follow a predictable law of mixture trend.

| Polyetherimide, % | 0 | 10 | 20 | 30 | 40 |
|---|---|---|---|---|---|
| Tensile Strength X$10^3$PSI (MPa) | | | | | |
| Yield | None | None | 21.6 (149) | 19.5 (134) | 19.8 (137) |
| Break | 26.9 (185) | 22.2 (153) | 20.9 (144) | 18.7 (129) | 19.2 (132) |
| Tensile Elongation, % | | | | | |
| Yield | None | None | 13.8 | 12.6 | 10.9 |
| Break | 17.3 | 24.5 | 25.7 | 22.3 | 18.1 |
| Notched Izod Impact, ft-lbs/in (J/m) | 2.6 (1438) | 2.6 (1438) | 2.5 (1383) | 2.8 (1548) | Not Run |

Note: Samples have been cured @ 500°F. (260°C)

EXAMPLE XI

The addition of 10%, 20% or 30% by polymer weight of polyetherimide significantly improves the Falling Dart impact resistance of the polyamide-imide copolymer, as illustrated below. These impact results are ideal since the polyamide-imide copolymer/polyetherimide alloys had impact properties superior to either of its blend components, thus exhibiting a synergestic impact trend. The dart used in the experiment had a radius of 0.5 inches and it weighed 1.33 pounds. An impact failure occurred when a crack was initiated (visually determined) on the 60 mil plaque surface.

| % Polyetherimide | 0 | 10 | 20 | 30 | 100 |
|---|---|---|---|---|---|
| Dart Impact in-lbs (Nm) As Molded<br>Cured @ 500 ° F (260 ° C) | 0.8 (0.088)<br>15.5 (1.7) | 1.1 (0.121)<br>22.3 (2.5) | 1.1 (0.121)<br>62.0 (6.8) | 1.1 (0.121)<br>48.3 (5.3) | 4.0* (0.44)<br>* |

* Polyetherimides do not require a cure step to achieve ultimate properties. Polyetherimide plaques that were cured at 500 ° F (260 ° C) distorted and warped. The 60 mil thick plaques are also conditioned at 73 ° F (23 ° C) and 50% relative humidity for 24 hours before testing. The testing is done in a room controlled at 73 ° F (23 ° C) and 50% relative humidity.

## Claims

**1.** An injection moldable composition having improved toughness when annealed at temperatures up to 500 ° F (260 ° C), comprising 10 to 30 percent by weight of a polyetherimide melt compounded with 90 to 70% by weight of a polyamide-imide copolymer, wherein said polyetherimide comprises repeating units of formula

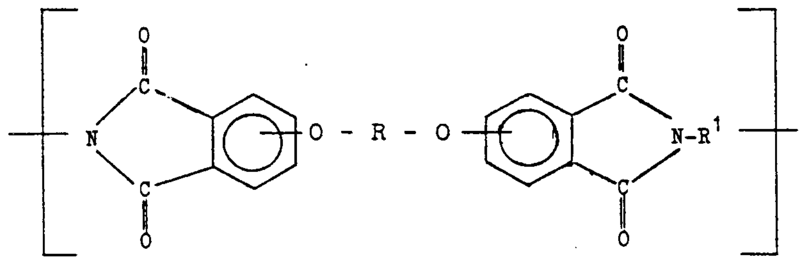

where R is selected from (a) the following divalent organic radicals:

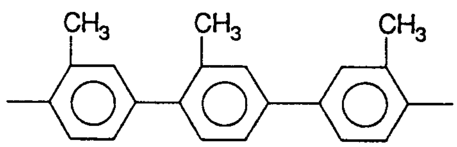

,

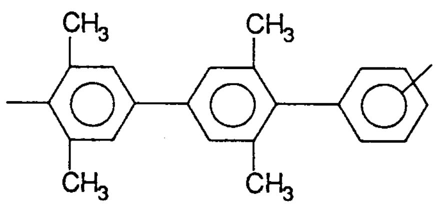

,

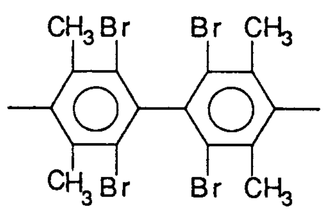

,

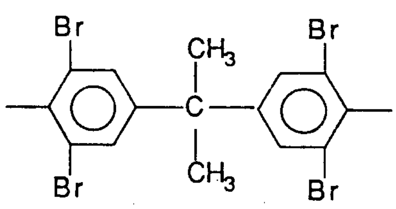

and (b) divalent organic radicals of the general formula

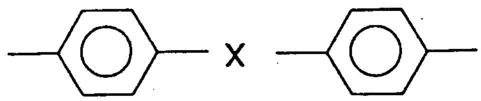

where X is $-C_yH_{2y}-$, y being a whole number equal to 1 to 5 inclusive and $R^1$ is a divalent organic radical selected from (a) aromatic hydrocaron radicals having from 6-20 carbon atoms and halogenated derivatives thereof, (b) alkylene radicals and cycloalkylene radicals having from 2-20 carbon atoms, (c) $C_{(2-8)}$ alkylene terminated polydiorganosiloxanes, and (d) divalent radicals of the formula

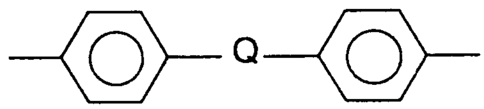

where Q is selected from:

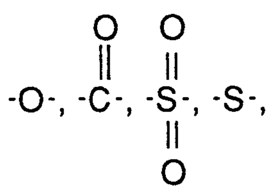 and $-C_xH_{2x}-$

and x is a whole number equal to from 1 to 5, inclusive and said polyamide-imide copolymer comprises A units:

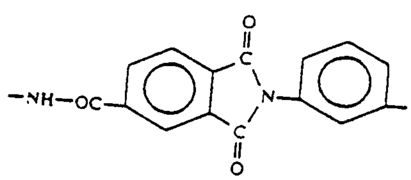

and B units:

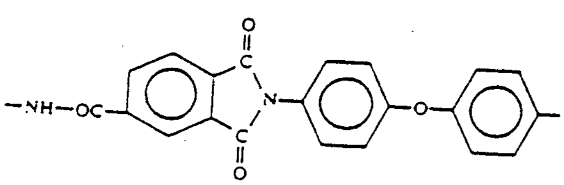

wherein the molar ratio of A units/B units is about 30/70.

**2.** The injection moldable composition of claim 1 wherein R and $R^1$ are divalent aromatic radicals.

3. The injection moldable composition of claim 1 wherein said polyetherimide has the following repeating unit:

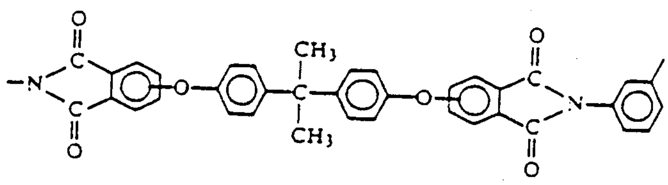

4. A process for improving the impact properties of an amide-imide copolymer, said process comprising melt compounding 10 to 30 weight percent of a polyetherimide with 90 to 70% by weight of an amide-imide copolymer, wherein said polyetherimide comprises repeating units of formula

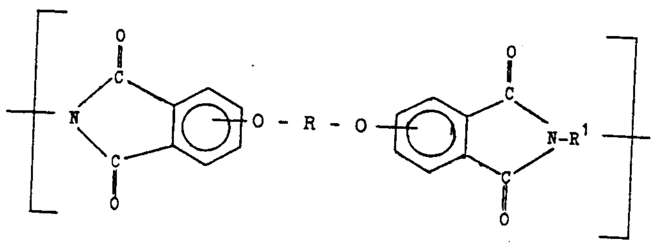

where R and $R_1$ are as defined in Claim 1 and said polyamide-imide copolymer comprises A units of:

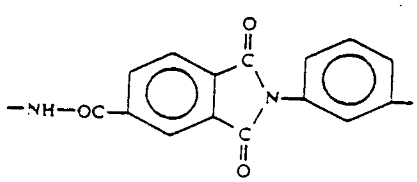

and B units of:

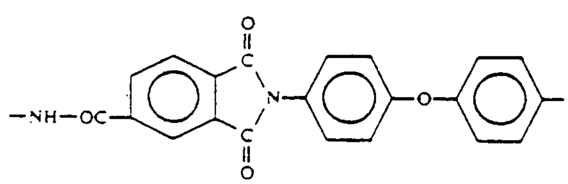

wherein the molar ratio of A units/B units is about 30/70.

5. The process of claim 4 wherein R and $R^1$ are divalent aromatic radicals.

**6.** The process of claim 4 wherein said polyetherimide has the following repeating unit:

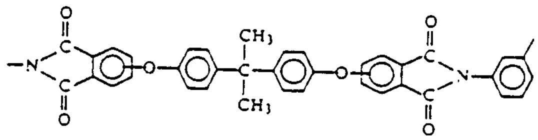

## Revendications

**1.** Composition moulable par injection, ayant une ténacité améliorée quand elle est recuite à des températures allant jusqu'à 260 ° C (500 ° F), comprenant 10 à 30 % en poids polyétherimide mélangé à l'état fondu à 90-70 % en poids d'un copolymère polyamide-imide, dans laquelle ledit polyétherimide comprend des motifs de formule

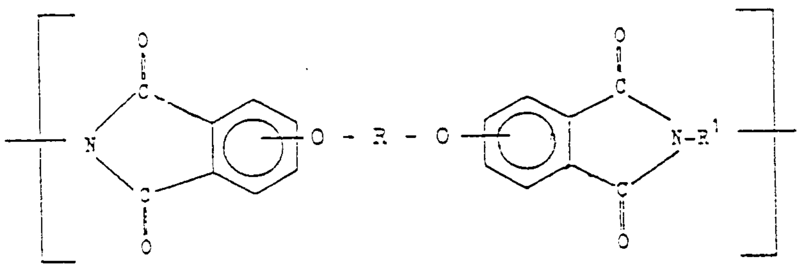

dans laquelle R est choisi parmi (a) les radicaux organiques divalents suivants :

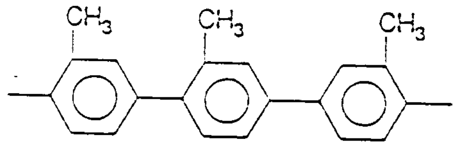

,

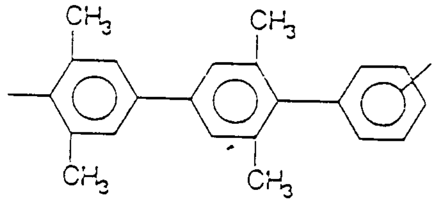

,

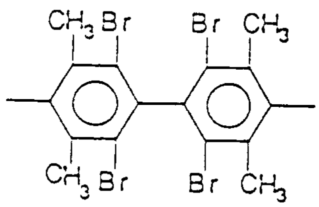

,

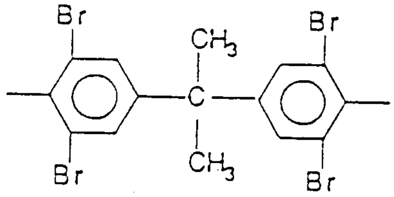

et (b) les radicaux organiques divalents de formule générale

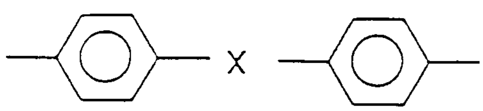

dans laquelle X est $-C_yH_{2y}-$, y étant un nombre entier de 1 à 5, limites incluses, et $R^1$ est un radical organique divalent choisi parmi (a) les radicaux hydrocarbonés aromatiques ayant de 6 à 20 atomes de carbone et leurs dérivés halogénés, (b) les radicaux alkylène et les radicaux cycloalkylène ayant de 2 à 20 atomes de carbone, (c) les polydiorganosiloxanes comportant en position terminale des radicaux alkylène en $C_{(2-8)}$, et (d) les radicaux divalents de formule :

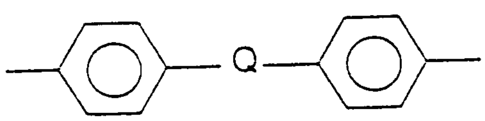

dans laquelle Q est choisi parmi

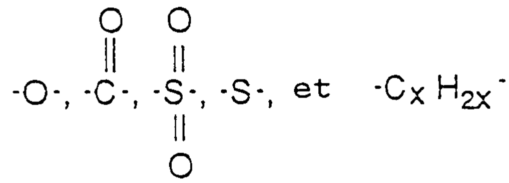

et x est un nombre entier compris entre 1 et 5, limites incluses,

et ledit copolymère polyamide-imide comprend des motifs A

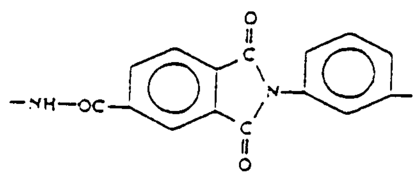

et des motifs B

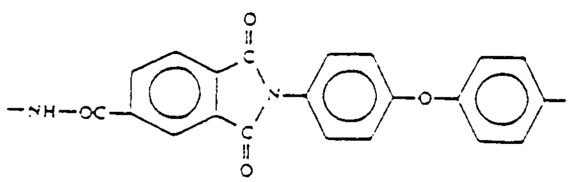

où la proportion molaire des motifs A aux motifs B est d'environ 30/70.

**2.** Composition moulable par injection selon la revendication 1, dans laquelle R et $R^1$ sont des radicaux aromatiques divalents.

**3.** Composition moulable par injection selon la revendication 1, dans laquelle ledit polyétherimide a le motif suivant:

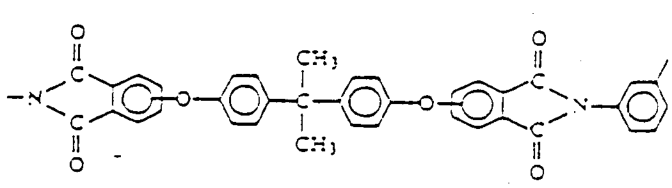

**4.** Procédé pour améliorer les propriétés de résistance au choc d'un copolymère amide-imide, ce procédé consistant à mélanger à l'état fondu 10 à 30 % en poids d'un polyétherimide et 90 à 70 % en poids d'un copolymère amide-imide, ledit polyétherimide comprenant des motifs de formule

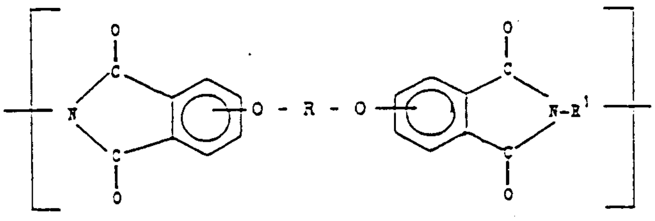

dans laquelle R et $R_1$ sont tels que définis dans la revendication 1, et ledit copolymère polyamide-imide comprend des motifs A de formule :

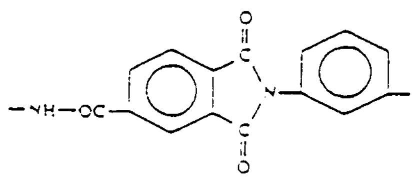

et des motifs B de formule :

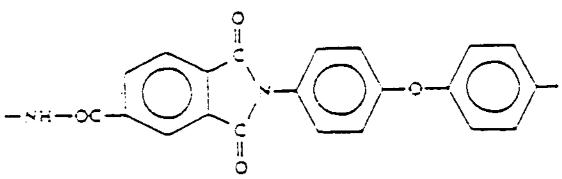

où la proportion molaire des motifs A aux motifs B est d'environ 30/70.

5. Procédé selon la revendication 4, dans lequel R et $R^1$ sont des radicaux aromatiques divalents.

6. Procédé selon la revendication 4, dans lequel ledit polyétherimide a le motif suivant :

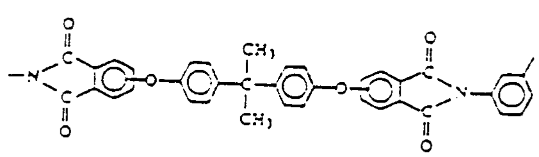

**Patentansprüche**

1. Zum Spritzguß geeignete Zusammensetzung mit verbesserter Zähigkeit, wenn sie bei Temperaturen von bis zu 500 °F (260 °C) getempert wird, umfassend 10 bis 30 Gewichtsprozent einer Polyetherimidschmelze, die mit 90 bis 70 Gewichtsprozent eines Polyamid-Imid-Copolymers aufbereitet wurde, worin das Polyetherimid sich wiederholende Einheiten der Formel

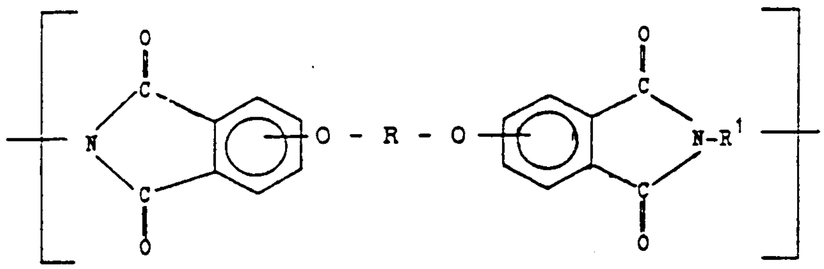

umfaßt, worin R ausgewählt ist aus (a) den folgenden divalenten organischen Resten:

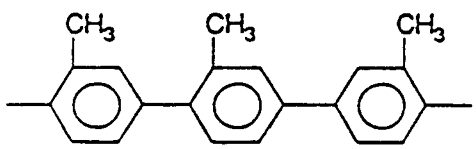

,

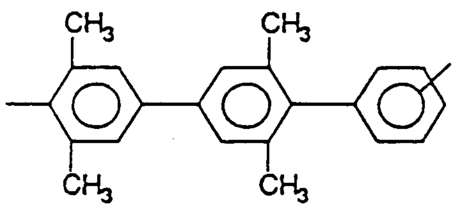

,

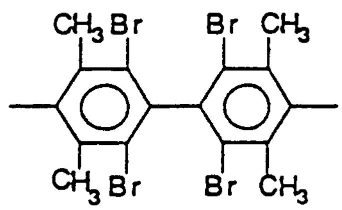

,

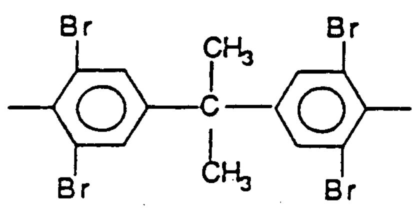

und (b) divalenten organischen Resten der allgemeinen Formel

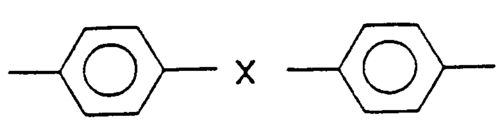

,

worin X $-C_yH_{2y}-$ ist, wobei y eine ganze Zahl von 1 bis einschließlich 5 ist und $R^1$ ein divalenter organischer Rest ist ausgewählt aus (a) aromatischen Kohlenwasserstoffresten mit 6 bis 20 Kohlenstoffatomen und deren halogenierten Derivaten, (b) Alkylenresten und Cycloalkylenresten mit 2 bis 20 Kohlenstoffatomen, (c) Polyorganosiloxanen mit $C_{(2-8)}$-Alkylenendgruppen und (d) divalenten Resten der Formel:

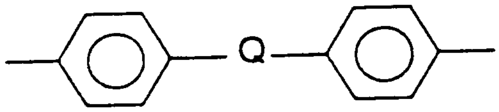

,

worin Q ausgewählt ist aus

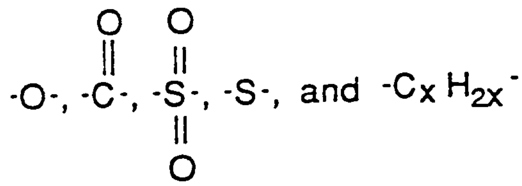

und x eine ganze Zahl von 1 bis einschließlich 5 ist, wobei das Polyamid-Imid-Copolymer Einheiten A:

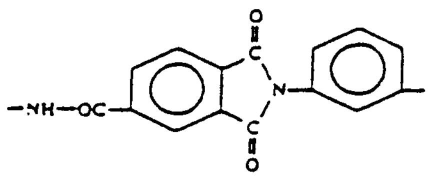

und Einheiten B:

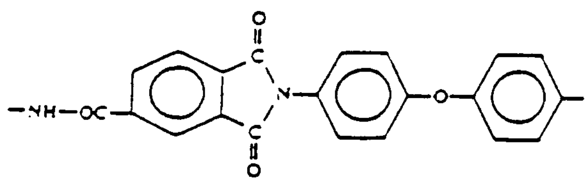

umfaßt, wobei das molare Verhältnis von Einheiten A zu Einheiten B etwa 30 zu 70 ist.

2. Zum Spritzguß geeignete Zusammensetzung nach Anspruch 1, worin R und $R^1$ divalente aromatische Reste sind.

3. Zum Spritzguß geeignete Zusammensetzung nach Anspruch 1, worin das Polyetherimid die folgende wiederkehrende Einheit hat:

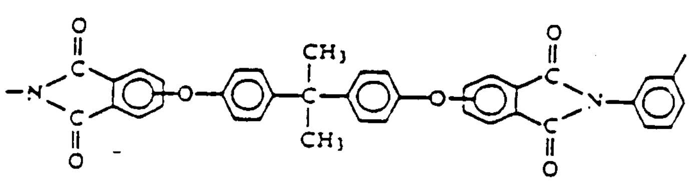

4. Verfahren zur Verbesserung der Aufpralleigenschaften eines Amid-Imid-Copolymers, wobei dieses Verfahren umfaßt, daß man 10 bis 30 Gewichtsprozent eines Polyetherimids mit 90 bis 70 Gewichtsprozent eines Amid-Imid-Copolymers in der Schmelze compoundiert, wobei das Polyetherimid wiederkehrende Einheiten der Formel

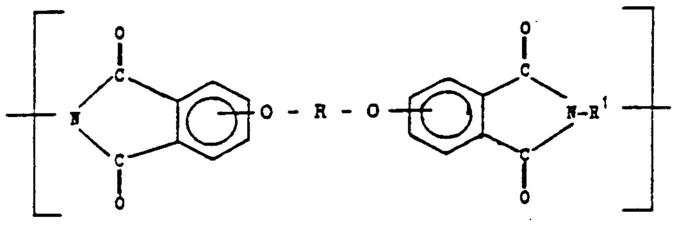

enthält, wobei R und $R^1$ wie in Anspruch 1 definiert sind und das Polyamid-Imid-Copolymer Einheiten A:

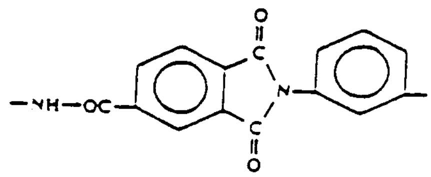

und Einheiten B:

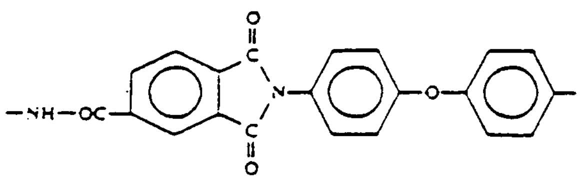

enthält, wobei das molare Verhältnis von Einheiten A zu Einheiten B etwa 30 zu 70 ist.

**5.** Verfahren nach Anspruch 4, wobei R und $R^1$ divalente aromatische Reste sind.

**6.** Verfahren nach Anspruch 4, wobei das Polyetherimid die folgende sich wiederholende Einheit hat: